# EUROPEAN PATENT SPECIFICATION

(11) **EP 4 565 476 B1**
(45) Date of publication and mention of the grant of the patent: **08.04.2026**
(21) Application number: 23748083.5
(22) Date of filing: 01.08.2023
(51) Int. Cl.: B62K 11/04, B62M 7/04, B62K 19/00

(54) **MOTORCYCLE FRAME WITH VARIABLE STIFFNESS**
MOTORRADRAHMEN MIT VARIABLER STEIFIGKEIT
CADRE DE MOTOCYCLETTE À RIGIDITÉ VARIABLE

(30) Priority: 02.08.2022 IT 202200016422
(43) Date of publication of application: 11.06.2025
(73) Proprietor: Piaggio & C. S.P.A., 56025 Pontedera Pisa (IT)
(72) Inventor: DE LUCA, Marco, 56025 Pontedera (PI) (IT); BERGAMO, Germano, 56025 Pontedera (PI) (IT)
(74) Representative: Mannucci, Michele
(86) International application number: PCT/EP2023/071283
(87) International publication number: WO 2024/028318

(56) References cited:
- EP-A2- 0 322 305
- JP-A- H0 986 468

## Description

### TECHNICAL FIELD

The present invention relates to the field of motorcycle frames, especially to the field of frames for racing motorcycles.

### STATE OF THE ART

The state of the art includes motorcycle frames made of aluminum or composite materials to balance the needs of lightness and stiffness.

Motorcycle frames usually have a "U" or "O" shape to connect the steering head to the rear wheel swingarm. The frames also allow the anchoring of the propulsion engine. In general, the engine is installed directly on the frame.

In some frames, the engine is installed on the frame by means of brackets for stiffness reasons. The brackets are connected to the frame by means of connection means and the engine is installed on the brackets. In this way the stiffness of the frame can be adjusted and the longitudinal and lateral stiffness can be optimized. In practice, the stiffness of the brackets is less, or in any case different, than that of the frame and allows the torsions and typical movements of the engine to be transferred to the frame only partially.

In the latter type of frame, the brackets are designed to have sufficient longitudinal stiffness to avoid the so-called "frame closure" phenomenon, i.e. excessive advancement of the engine with respect to the steering head during braking. This phenomenon is even more perceptible in racing motorcycles, in particular those of the MotoGP^{™}. In these motorcycles, the frames are extremely affected by the deformations caused by braking, which are much more powerful than those of normal motorcycles.

To solve this problem of the "frame closure" during braking, the engine support brackets are usually over-sized, but this leads to greater weight and a loss of performance, in terms of stiffness, when cornering, as the frame becomes stiffer in longitudinal deformations, but also more rigid in lateral deformations. Document EP0322305A2 shows the preamble of claim 1.

### SUMMARY

The aforementioned drawbacks of the prior art are now solved by a motorcycle frame, which comprises a main body extending in a longitudinal direction and a pair of brackets connected to the main body and configured to support at least partially an engine, wherein said frame comprises a pair of struts configured to be rigid in compression and free in traction. Each strut is connected at a front end to the main body and at a rear end to one of said brackets. The frame thus conceived has greater rigidity. During braking, the mass of the engine tends to advance by discharging its weight partly on the brackets and partly on the strut. Conversely, during acceleration, the strut is free to lengthen and the engine discharges its mass only on the brackets.

These and other advantages will become more apparent from the below description of an embodiment given just by way of non-limiting example with reference to the attached drawing.

### DESCRIPTION OF THE DRAWING

In the drawings:
Fig. 1 shows a schematic side view of a frame according to the present invention;
Fig. 2 shows a schematic top view of a frame according to the present invention;
Fig. 3 shows an axonometric view of a strut according to the present invention;
Fig. 4 shows a sectional view of the strut of Fig. 3;
Fig. 5 shows an axonometric view of a further embodiment of the strut according to the present invention;
Fig. 6 shows a sectional view of the strut of Fig. 5.

### DETAILED DESCRIPTION

The following description of one or more embodiments of the invention refers to the attached drawing. The same reference numbers in the drawings identify equal or similar elements. The subject of the present invention is defined by the attached claims. The technical details, structures or characteristics of the solutions described below can be combined with one another in any way.

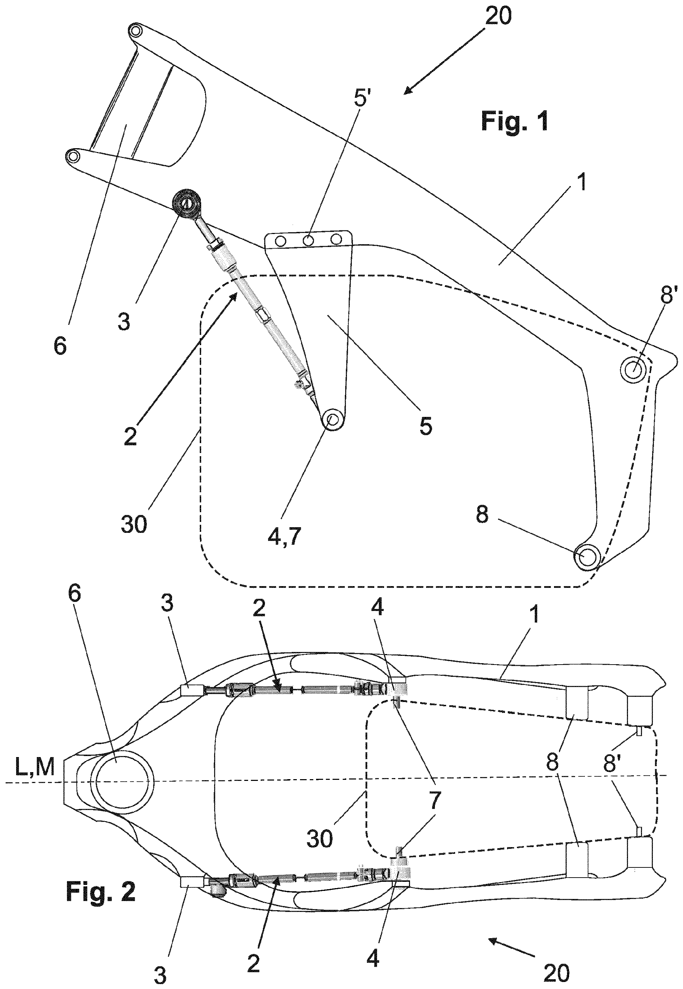

In Figs. 1 and 2, the reference number 20 indicates a motorcycle frame.

The frame 20 comprises a main body 1, which extends in a longitudinal direction L. A pair of brackets 5 is provided, which is connected to the main body 1 and is configured to support at least partially an engine 30, schematically indicated with a dashed line.

Each bracket 5 of said pair of brackets is arranged on a respective side of the main body 1, with respect to the longitudinal direction L, as shown in Fig. 2. Constructively, each bracket 5 is mechanically connected to the main body 1 of the frame 20 by means of connection elements 5', for example by bolt-nut coupling.

Each bracket 5 is connected to the engine 30 at respective connection points 7.

The engine 30 is also connected to respective connection portions 8 and 8' (Figs. 1 and 2). The connection portions 8 and 8' belong to the main body 1 and are distal relative to a steering head 6. The connection points 7 of the brackets 5 and the connection portions 8 and 8' realize a suspended mounting of the engine 30 with respect to the body of the frame 1.

Furthermore, the frame 20 comprises at least a pair of struts 2, in particular each of which is arranged on the opposite side with respect to a median plane M, as shown in figure 2. This symmetrical arrangement allows the loads to which the frame 20 is subjected to be balanced, mainly in the deceleration and braking phases, as detailed below.

In particular, each of the struts 2 is configured to be rigid in compression and free in traction. In other words, each strut 2 is so made as to be deformed, mainly axially when subjected to a tensile load, but to be a rigid element, i.e. a strut, when subjected to a compressive load.

Each strut 2 is constructively connected at a front end 3 to the main body 1 and at a rear end 4 to a corresponding bracket 5. The term "front" and "rear" refer to the front-rear direction of the motorcycle. The motorcycle comprises a front end comprising a steering head 6, to which there is connected a steering member controlling a front steered wheel, not shown, and a rear end extending opposite the front end and including a rear driving wheel, not shown.

Preferably, the front end 3 of the strut 2 is connected to the main body 1 near the steering head 6. Always preferably, the rear end 4 of the strut 2 is connected to the bracket 5 near the connection point 7 where the bracket 5 is connected to the engine 30. The rear end 4 of the strut 2 coincides preferably with the connection point 7.

In this way, the pair of struts 2 allows to absorb compressive loads acting on the main frame 1, while remains idle and irrelevant when loads, different than the compressive ones, act. These compressive loads are mainly those which develop in sudden deceleration and braking of the motorcycle, and tend to "close" the main body of the frame 1, i.e. to generate an angular momentum in clockwise direction in Fig.2. The function of the struts 2 is to increase the stiffness of the brackets 5 during braking and to discharge the forces mainly on the part of the main body 1 which is close to the steering head 6. In this way, the motorcycle is more stable during braking, allowing the rider to enter a corner in a more fluid and composed way.

At the same time, the pair of struts 2 is transparent in the other operating conditions of the motorcycle, for example when cornering or accelerating, allowing a deformation of the main body 1 and of the brackets 5 with respect to the main body 1. With tensile loads or tangential loads developing when accelerating and/or cornering, the pair of struts 2 is neutral, allowing a labile deformation of the main body 1 and of the brackets 5 relative to the main body 1.

In this way, greater flexibility of the frame 20 is ensured, which is necessary above all in the phase of acceleration or cornering. The flexibility of the frame 20 allows for more tire grip, and therefore more traction under acceleration out of a corner.

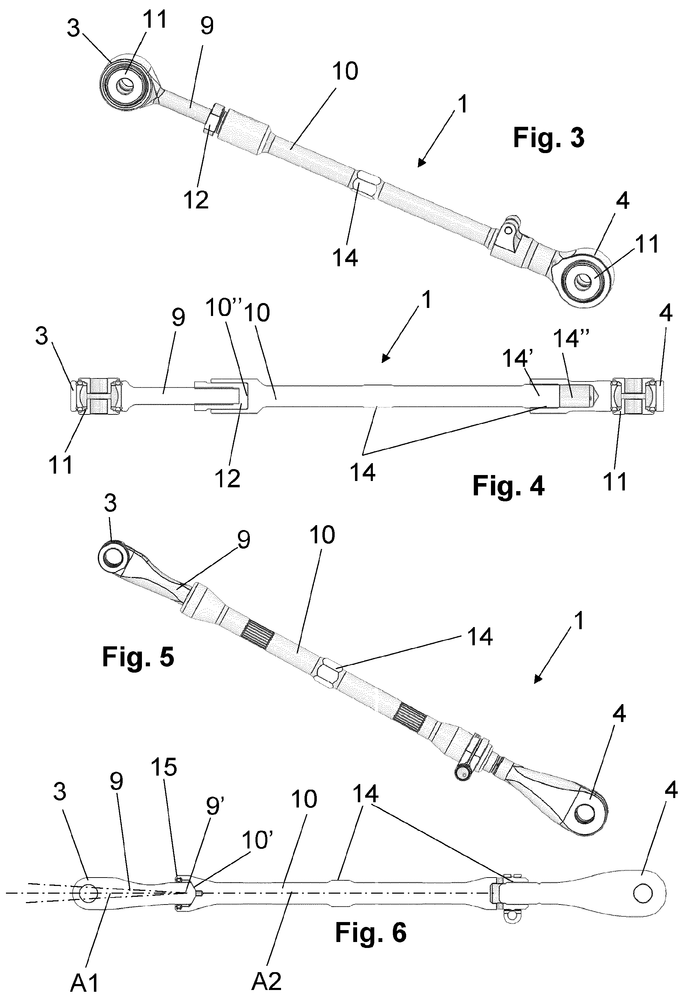

Constructively, with reference to Figs. 3 and 4, a first embodiment of the strut 2 is shown, while Figs. 5 and 6 show a second embodiment of the strut 2.

In both embodiments, the strut 2 comprises a front portion 9 coupled to a rear portion 10. The front portion 9 is the one facing the steering head 6, while the rear portion 10 is the one facing the bracket 5. The two portions 9 and 10 can be also arranged conversely.

In the first embodiment, the coupling between the front portion 9 and the rear portion 10 is a prismatic joint. In particular, this prismatic joint is obtained through a bush 12 screwed to the front portion 9 forming a male element inserted into a female element of the rear portion 10.

Fig. 4 shows a section of Fig. 3, where the prismatic joint is visible. When a compressive load applied to the ends 3 and 4 acts on the strut 2 - respectively connected to the main body 1 of the frame 20 and to the bracket 5 - the bush 12 connected to the front portion 9 tends to enter a hollow part, i.e. the female element, of the rear portion 10 up to touching a rear wall 10" of the female element of the rear portion 10, and effectively realizing an incompressible rigid element, as shown in Fig. 3. The rear wall 10" forms an abutment surface for the male element which, in this embodiment, is represented by the bush 12 connected to the front portion 9. In other embodiments the bush 12 can be omitted and the male element can be formed as an integral part of the front portion 9. When the male element abuts against the abutment surface of the female element, the function of compression-stiff strut is obtained. Conversely, when tensile loads, tending to move the connection points 3 and 4 away from each other, act on the strut 2, the prismatic joint with the bush 12 allows the front portion 9 to move away from the portion 10 by moving the bush 12 inside the rear portion 10, moving away from the rear wall 10". The strut 2 is therefore neutral and irrelevant to these tensile deformations as the front portion 9 and the rear portion 10 are free to move relative to each other.

According to a further advantageous aspect, the strut 2 comprises, at one or both ends 3,4 a ball joint 11 configured to connect to the main body 1 and/or to said brackets 5.

In particular, as shown in Fig. 3, respective ball joints 11 are provided on each end 3 and 4. In this way, the ball joints 11 allow the intrinsic lateral stiffness of the brackets 5 with respect to the main body 1 to be kept unchanged. The mechanical connection 5' of the brackets 5 with respect to the main body 1 of the frame 20 has a lateral stiffness which allows a lateral movement - albeit minimal by a few degrees - of the brackets 5 with respect to the main body 1. The brackets 5 practically tend substantially to flex laterally with respect to the main body 1. The function of the ball joints 11 is to ensure that the strut 2 at the connection points 3 and 4 is irrelevant and neutral with respect to the lateral bending of the brackets 5. The effect achieved through the ball joints 11 is in fact that of following the lateral displacement of the brackets 5 relative to the main body 1 of the frame 20. The ball joints 11 do not transfer the momentum and therefore the impact on the lateral stiffnesses is nominally null. In other words, when the motorcycle is cornering, the brackets 5 tend to bend orthogonally with respect to the longitudinal direction L, due to the effect of the centrifugal force acting on the mass of the engine 30. The ball joints 11 on the connection points 3 and 4 allow to follow the lateral movement of the brackets 5, guaranteeing an unchanged "rigidity" of movement to the main body 1 of the frame 20 and to the respective brackets 5.

In addition, the ball joints 11 perform the same function in following the movements of the strut 2 in "release", i.e. in elongation following the deformations which tend to "open" the main body 1 of the frame 20. The ball joints 11 allow to obtain a deformation completely transparent to such opening movements; a result that cannot be obtained with other types of constraints. The ball joints 11 also contemplate the case in which the frame opens (intentionally) without necessarily deforming laterally.

In an alternative embodiment, shown in Figs. 5 and 6, the coupling between the front portion 9 and the rear portion 10 is achieved by means of a joint configured to allow a longitudinal axis A1 of the front portion 9 to incline with respect to a longitudinal axis A2 of the rear portion 10 (Fig. 6).

In detail, the joint of Fig. 6 is obtained by means of a conical coupling, in which the end 9' of the front portion 9 is the male element, while the end 10' of the rear portion 10 is the female element. A converse embodiment is also possible. A sealing element 15 is also provided, for example an O-ring. Based on the same operating principle described above, when the ends 3 and 4 are subjected to a compressive load, the conical male end 9' tends to insert into the female end 10'. It should be noted that, thanks to the conical shape of this coupling, when the portions 9 and 10 move towards each other, the antithetical taper of the respective ends 9' and 10' also guarantees an axiality between the front portion 9 and the rear portion 10. In other words, the male and female conical ends 9 ', 10' tend to recover the axiality when moved towards o each other. In substance, as in the previously described embodiment, the female end 10' formed (in this case) by the rear portion 10, forms an abutment surface (in this case of concave conical shape) against which the male element formed by the end 9' of the front portion 9 goes in contact. The male element has a convex conical end surface complementary to the shape of the abutment surface formed by the female end. When the two complementary conical surfaces come into contact, i.e. when the male element abuts against the abutment surface defined in the bottom of the female element, the strut becomes rigid under compression.

On the contrary, the conical male and female ends 9', 10', when moved away from each other, allow an oscillation of the front portion 9 relative to the rear portion 10, i.e. a change in the incidence of the axis A1 relative to the axis A2. The incidence of the angle formed between the axis A1 and the axis A2 is between 0° and 3°, in particular between 0° and 2°, more in particular an angle lower than 2°.

Also in this solution, the strut 2 remains neutral with respect to lateral movements of the brackets 5. When the ends 9' and 10' are spaced from each other it is like having two rods 9 and 10 not in contact with each other and therefore inactive with respect to the main body 1.

In this embodiment, the strut 2 is even lighter, as the ball joints 11 have been eliminated, and at the same time self-centering, thanks to the conical end stop which serves to "center" the system when it abuts (recovery of axiality).

In both embodiments described above, the strut 2 comprises adjusting means 14 configured to adjust the length of the strut 2. In particular, the adjusting means 14 comprise an adjustment threaded coupling 14', 14" provided at the end of the rear portion 10 facing the end 4. The threaded portion 14' engages a respective seat 14". By acting on a hexagonal portion obtained on the rear portion 10, in a more accessible position, it is possible to adjust the stroke of the thread 14' in the seat 14" and therefore the preload of the strut 2.

A similar solution, indicated with the reference number 14, is also provided in the embodiment of Figs. 5 and 6.

In both solutions, the stop is adjustable both to establish exactly the moment in which the system will abut (sudden increase in stiffness) and to cancel it, without the need for removing the struts 2, by moving the stop away from the area of possible engagement (the system never goes into compression under braking, so it is as if it were non-existent).

In a further embodiment of the present invention, a pair of struts 2 is provided, which are actuated by means of gear mechanisms connected to the handlebar and directly controlled by the rider (not shown).

For example, a lever on the handlebar which actuates the struts 2 so as to vary the length and therefore the stiffness thereof, symmetrically or alternatively asymmetrically with respect to the median plane M.

A passive asymmetrical operation of the struts 2 provides for non-simultaneous interventions of the two struts 2, arranged opposite, to generate suitable transverse displacements of the frame during braking.

In a further embodiment (not shown), the length of the strut 2 (and consequently the stiffness thereof) is adjusted by means of an actuator controlled by a control unit.

The control unit can be configured to implement a control logic, which is activated according to a series of vehicle functional parameters during vehicle operating conditions (corner or straight line). For example, an actuator coupled to the brake line (typically front) configured to adjust the stiffness of the strut 2 controlled by the pressure acting on the brake system directly by the rider

In conclusion, it is clearly apparent that modifications and variants can be applied to the present invention without departing from the protective scope as defined be the appended claims. In practice, the amounts can be varied according to the technical requirements.

### Legenda:

1 main body
2 strut
3 front end (of the strut)
4 rear end (of the strut)
5 bracket
5' mechanical coupling elements
6 steering head
7 connection point
8 connection portion frame main body
9 front portion (of the strut)
10 rear portion (of the strut)
10" rear wall
11 ball joint
12 bush
14 adjusting means
A1 front portion axis
A2 rear portion axis
L longitudinal direction
M median plane

## Claims

1. Motorcycle frame (20) comprising a main body (1) extending in a longitudinal direction (L) and a pair of brackets (5) configured to at least partially support an engine (30) connected to the main body (1), **characterized by** said frame comprising a pair of struts (2) configured to be rigid in compression and free in traction, each strut (2) being connected at a front end (3) to the main body (1) and at a rear end (4) to one of said brackets (5); wherein said strut (2) comprises a front portion (9) coupled to a rear portion (10).

2. Frame (20) according to claim 1, wherein one of said front portion (9) and rear portion (10) comprises a female element and the other of said front portion (9) and rear portion (10) comprises a male element; wherein the male element is slidingly housed in the female element such that the front portion (9) and the rear portion (10) are coupled to one another; wherein the female element forms an abutment surface for the male element; and wherein the strut is rigid in compression when the male element and the female element contact each other at the abutment surface.

3. Frame (20) according to claim 1 or 2, wherein said coupling between the front portion (9) and the rear portion (10) is a prismatic joint.

4. Frame (20) according to claim 3, wherein said prismatic joint is obtained through a bush (12) screwed to the front portion (9) forming a male element, which is inserted into the rear portion (10) forming a female element, or vice versa.

5. Frame (20) according to claim 3 or 4, wherein said strut (2) comprises at one or both said front and rear ends (3, 4) a ball joint (11) configured to connect to said main body (1) and/or to said brackets (5).

6. Frame (20) according to claim 1 or 2, wherein the front portion (9) and the rear portion (10) are connected by a joint configured to allow a longitudinal axis (A1) of the front portion (9) to tilt, preferably by an angle less than two degrees, with respect to a longitudinal axis (A2) of the rear portion (10).

7. Frame (20) according to claim 6, wherein the joint comprises a male element consisting of one end (9') of one of said front portion (9) and rear portion (10), and a female element consisting of one end (10') of the other of said front portion (9) and rear portion (10); wherein the male element is inserted into the female element; wherein the male element has a convex conical surface and the female element has a concave conical surface forming abutment for the convex conical surface of the male element; and wherein when the male element and the female element approach each other, the conical shape of the male element and of the female element guarantees axial alignment between the front portion (9) and the rear portions (10) of the strut

8. Frame (20) according to any one of the preceding claims, wherein said strut (2) comprises adjusting means (14) configured to adjust the length of the strut (2).

9. Frame (20) according to any one of the preceding claims, wherein said front end (3) of the strut (2) is connected to the main body (1) near a steering head (6).

10. Frame (20) according to any one of the preceding claims, wherein said rear end (4) of the strut (2) is connected to the bracket (5) near the connection point (7) of the bracket (5) to said engine (30).

11. Frame (20) according to any one of the preceding claims, wherein said struts (2) are arranged substantially parallel to a median plane (M) of the main body (1).

12. A motorcycle comprising an engine and a frame according to any one of the preceding claims, whereon the engine is mounted.

## Patentansprüche

1. Motorradrahmen (20) mit einem sich in einer Längsrichtung (L) erstreckenden Hauptkörper (1) und einem Paar Halterungen (5), die so eingerichtet sind, dass sie einen mit dem Hauptkörper (1) verbundenen Motor (30) zumindest teilweise tragen, **dadurch gekennzeichnet, dass** der Rahmen ein Paar Streben (2) umfasst, die so eingerichtet sind, dass sie bei Druck starr und bei Zug frei sind, wobei jede Strebe (2) an einem vorderen Ende (3) mit dem Hauptkörper (1) und an einem hinteren Ende (4) mit einer der Halterungen (5) verbunden ist; wobei die Strebe (2) einen vorderen Abschnitt (9) umfasst, der mit einem hinteren Abschnitt (10) verbunden ist.

2. Rahmen (20) gemäß Anspruch 1, wobei der vordere Abschnitt (9) oder der hintere Abschnitt (10) ein weibliches Element umfasst und der jeweils andere Abschnitt (9, 10) ein männliches Element umfasst; wobei das männliche Element gleitend in dem weiblichen Element aufgenommen ist, so dass der vordere Abschnitt (9) und der hintere Abschnitt (10) miteinander verbunden sind; wobei das weibliche Element eine Anlagefläche für das männliche Element bildet; und wobei die Strebe bei Kontakt des männlichen Elements und des weiblichen Elements an der Anlagefläche drucksteif ist.

3. Rahmen (20) gemäß Anspruch 1 oder 2, wobei die Kopplung zwischen dem vorderen Abschnitt (9) und dem hinteren Abschnitt (10) ein prismatisches Gelenk ist.

4. Rahmen (20) gemäß Anspruch 3, wobei das prismatische Gelenk durch eine Buchse (12) erhalten wird, die an den einen ein männliches Element bildenden vorderen Abschnitt (9) geschraubt ist, der in den ein weibliches Element bildenden hinteren Abschnitt (10) eingeführt ist, oder umgekehrt.

5. Rahmen (20) gemäß Anspruch 3 oder 4, wobei die Strebe (2) an dem vorderen und/oder dem hinteren Ende (3, 4) ein Kugelgelenk (11) umfasst, das zur Verbindung mit dem Hauptkörper (1) und/oder den Halterungen (5) eingerichtet ist.

6. Rahmen (20) gemäß Anspruch 1 oder 2, wobei der vordere Abschnitt (9) und der hintere Abschnitt (10) durch ein Gelenk verbunden sind, das so eingerichtet ist, dass es eine Neigung der Längsachse (A1) des vorderen Abschnitts (9) gegenüber der Längsachse (A2) des hinteren Abschnitts (10) ermöglicht, vorzugsweise um einen Winkel von weniger als zwei Grad.

7. Rahmen (20) gemäß Anspruch 6, wobei das Gelenk ein männliches Element, das aus einem Ende (9') des vorderen Abschnitts (9) oder des hinteren Abschnitts (10) besteht, und ein weibliches Element, das aus einem Ende (10') des jeweils anderen Abschnitts (9, 10) besteht, umfasst; wobei das männliche Element in das weibliche Element eingeführt ist; wobei das männliche Element eine konvexe konische Oberfläche und das weibliche Element eine konkave konische Oberfläche aufweist, die einen Anschlag für die konvexe konische Oberfläche des männlichen Elements bildet; und wobei, wenn sich das männliche Element und das weibliche Element einander annähern, die konische Form des männlichen Elements und des weiblichen Elements eine axiale Ausrichtung zwischen dem vorderen Abschnitt (9) und den hinteren Abschnitten (10) der Strebe gewährleistet.

8. Rahmen (20) gemäß einem der vorangegangenen Ansprüche, wobei die Strebe (2) eine Einstelleinrichtung (14) umfasst, die zum Einstellen der Länge der Strebe (2) eingerichtet ist.

9. Rahmen (20) gemäß einem der vorangegangenen Ansprüche, wobei das vordere Ende (3) der Strebe (2) in der Nähe eines Lenkkopfes (6) mit dem Hauptkörper (1) verbunden ist.

10. Rahmen (20) gemäß einem der vorangegangenen Ansprüche, wobei das hintere Ende (4) der Strebe (2) in der Nähe des Verbindungspunkts (7) der Halterung (5) mit dem Motor (30) mit der Halterung (5) verbunden ist.

11. Rahmen (20) gemäß einem der vorangegangenen Ansprüche, wobei die Streben (2) im Wesentlichen parallel zu einer Mittelebene (M) des Hauptkörpers (1) angeordnet sind.

12. Motorrad umfassend einen Motor und einen Rahmen gemäß einem der vorangegangenen Ansprüche, auf dem der Motor montiert ist.

## Revendications

1. Cadre de motocyclette (20) comprenant un corps principal (1) s'étendant dans une direction longitudinale (L) et une paire de supports (5) configurés pour supporter au moins partiellement un moteur (30) connecté au corps principal (1), **caractérisé en ce que** ledit cadre comprend une paire de barres (2) configurées pour être rigides en compression et libres en traction, chaque barre (2) étant connectée à une extrémité avant (3) du corps principal (1) et à une extrémité arrière (4) de l'un desdits supports (5) ; ladite barre (2) comprenant une partie avant (9) couplée à une partie arrière (10).

2. Cadre (20) selon la revendication 1, dans lequel l'une de ladite partie avant (9) et partie arrière (10) comprend un élément femelle et l'autre desdites partie avant (9) et partie arrière (10) comprend un élément mâle ; l'élément mâle étant logé de manière coulissante dans l'élément femelle de sorte que la partie avant (9) et la partie arrière (10) soient couplées l'une à l'autre ; l'élément femelle formant une surface de butée pour l'élément mâle ; et la barre étant rigide en compression lorsque l'élément mâle et l'élément femelle entrent en contact l'un avec l'autre au niveau de la surface de butée.

3. Cadre (20) selon la revendication 1 ou 2, dans lequel ledit couplage entre la partie avant (9) et la partie arrière (10) est un joint prismatique.

4. Cadre (20) selon la revendication 3, dans lequel ledit joint prismatique est obtenu par l'intermédiaire d'une douille (12) vissée à la partie avant (9) formant un élément mâle, lequel est inséré dans la partie arrière (10) formant un élément femelle, ou vice versa.

5. Cadre (20) selon la revendication 3 ou 4, dans lequel ladite barre (2) comprend à au moins l'une des deux extrémité(s) avant et arrière (3,4), un joint à rotule (11) configuré pour se connecter audit corps principal (1) et/ou auxdits supports (5).

6. Cadre (20) selon la revendication 1 ou 2, dans lequel la partie avant (9) et la partie arrière (10) sont connectées par un joint configuré pour permettre à un axe longitudinal (A1) de la partie avant (9) de basculer, de préférence d'un angle inférieur à deux degrés, par rapport à un axe longitudinal (A2) de la partie arrière (10).

7. Cadre (20) selon la revendication 6, dans lequel le joint comprend un élément mâle constitué d'une extrémité (9') de l'une desdites partie avant (9) et partie arrière (10), et un élément femelle constitué d'une extrémité (10') de l'autre desdites partie avant (9) et partie arrière (10) ; l'élément mâle étant inséré dans l'élément femelle ; l'élément mâle ayant une surface conique convexe et l'élément femelle ayant une surface conique concave formant une butée pour la surface conique convexe de l'élément mâle ; et lorsque l'élément mâle et l'élément femelle s'approchent l'un de l'autre, la forme conique de l'élément mâle et de l'élément femelle garantissant un alignement axial entre la partie avant (9) et les parties arrière (10) de la barre.

8. Cadre (20) selon l'une quelconque des revendications précédentes, dans lequel ladite barre (2) comprend des éléments de réglage (14) configurés pour régler la longueur de la barre (2).

9. Cadre (20) selon l'une quelconque des revendications précédentes, dans lequel ladite extrémité avant (3) de la barre (2) est connectée au corps principal (1) près d'une tête de direction (6).

10. Cadre (20) selon l'une quelconque des revendications précédentes, dans lequel ladite extrémité arrière (4) de la barre (2) est connectée au support (5) près du point de connexion (7) du support (5) audit moteur (30).

11. Cadre (20) selon l'une quelconque des revendications précédentes, dans lequel ladite barre (2) est agencée sensiblement parallèlement à un plan médian (M) dudit corps principal (1).

12. Une motocyclette comprenant un moteur et un cadre selon l'une quelconque des revendications précédentes, sur lequel le moteur est monté.
